# FASCICULE DE BREVET EUROPEEN

(11) **EP 1 037 490 B1**
(45) Date de publication et mention de la délivrance du brevet: **08.11.2006**
(21) Numéro de dépôt: 00400525.2
(22) Date de dépôt: 28.02.2000
(51) Int. Cl.: H04Q 7/38

(54) **Procédé de sélection de cellule dans un système cellulaire de radiocommunication mobiles**
Zellauswahlverfahren für ein zellulares Mobilfunknetzwerksystem
Cell selection method in a cellular radio mobile network system

(30) Priorité: 05.03.1999 FR 9902800
(43) Date de publication de la demande: 20.09.2000
(73) Titulaire: ALCATEL, 75008 Paris (FR)
(72) Inventeur: Roberts, Michael, 92200 Neuilly s/Seine (FR); Courau, Francois, 92190 Meudon (FR)
(74) Mandataire: El Manouni, Josiane

(56) Documents cités:
- WO-A-96/28947
- WO-A-97/44922
- WO-A-98/38827
- US-A- 5 794 149
- MOULY M ET AL: "THE GSM SYSTEM FOR MOBILE COMMUNICATIONS" , FR, LASSAY-LES-CHATEAUX, EUROPE MEDIA, PAGE(S) 420-423 XP002055504 * le document en entier *

## Description

La présente invention concerne d'une manière générale les systèmes cellulaires de radiocommunications mobiles, c'est-à-dire les réseaux cellulaires de radiocommunications mobiles et les stations mobiles destinées à être utilisées dans ces réseaux.

Il est connu, dans les systèmes cellulaires de radiocommunications mobiles, de distinguer deux modes de fonctionnement pour les stations mobiles :
- le mode dédié, dans lequel une station mobile a à sa disposition un ou plusieurs canaux dédiés (qu'il s'agisse de canaux de trafic, utilisés pour transmettre des informations de trafic, ou de canaux de signalisation, utilisés pour transmettre des informations de signalisation, soit pendant une communication, soit en dehors d'une communication),
- le mode veille, dans lequel une station mobile n'a pas à sa disposition de canaux dédiés, mais doit néanmoins rester en contact avec le réseau, ce qu'elle fait par l'intermédiaire de canaux appelés canaux communs.

De manière connue, chaque cellule est associée à une fréquence particulière dite fréquence balise, sur laquelle sont diffusés lesdits canaux communs, et le processus de sélection (ou de resélection) de cellule serveuse par une station mobile est brièvement le suivant.

En mode veille, la station mobile reçoit sur la fréquence balise de sa cellule serveuse des premières informations système constituées par une liste de fréquences balise associées à des cellules voisines de sa cellule serveuse. La station mobile recherche alors successivement chacune de ces fréquences balise, afin d'une part d'effectuer sur celle-ci des mesures radio, et d'autre part d'acquérir, après synchronisation, des deuxièmes informations système constituées par un certain nombre de paramètres permettant, par combinaison avec lesdits résultats de mesures radio, de déterminer si un critère de sélection est vérifié pour cette fréquence balise, puis, par comparaison aux résultats obtenus de la même façon pour les autres fréquences balise, de déterminer la cellule à sélectionner. La station mobile détermine ensuite, grâce à des troisièmes informations système diffusées sur la fréquence balise de la cellule à sélectionner, si cette cellule appartient ou non à la même zone de localisation que la cellule serveuse courante. Si oui, la cellule à resélectionner devient la nouvelle cellule serveuse. Sinon, la station mobile en avise préalablement le réseau, par l'intermédiaire d'une procédure de mise à jour de localisation, afin de faire vérifier par le réseau le droit de l'utilisateur à accéder à la cellule ainsi déterminée. Dans le cas de réponse positive du réseau, cette cellule devient la nouvelle cellule serveuse.

En outre, à la mise en service d'une station mobile, aucune cellule serveuse n'ayant encore été sélectionnée, la station mobile sélectionne une cellule serveuse selon les mêmes principes, mais en explorant l'ensemble des fréquences balise, et en utilisant une procédure dite d'enregistrement pour la vérification des droits d'accès à la cellule sélectionnée.

En outre, suivant une fonction dite en anglais de "directed retry" (traduite ici par "ré-essai ré-orienté"), dans le cas où un appel ne peut pas être établi dans une cellule ainsi sélectionnée en mode veille (notamment pour des raisons de trafic, à cause d'une surcharge de trafic dans cette cellule, ou pour des raisons radio, à cause de problèmes de propagation radio dans cette cellule) le réseau commande à la station mobile de re-tenter un accès au réseau dans des cellules qui lui sont indiquées dans la phase d'établissement d'appel.

La procédure par laquelle une station mobile passe du mode veille au mode dédié est aussi appelée procédure d'accès.

En mode dédié, un processus similaire de sélection de cellule est mis en oeuvre, à ceci près que la station mobile reporte au réseau des résultats de mesures, et le réseau détermine, sur cette base ainsi que sur la base d'autres paramètres, la cellule cible à sélectionner, c'est-à-dire vers laquelle un transfert inter-cellulaire, ou plus simplement transfert (ou encore "handover" en anglais), est à effectuer. Plus précisément, la cellule sélectionnée est la première des cellules reportées (classées suivant un certain ordre, selon les résultats de mesure) vers laquelle le réseau détermine qu'un transfert est possible, c'est-à-dire en particulier dans laquelle des ressources sont disponibles pour un tel transfert. Un tel procédé est aussi appelé transfert inter-cellulaire assisté par le mobile (ou "mobile assisted handover" en anglais). De façon similaire, une fonction dite en anglais de "directed retry" peut être effectuée, dans le cas où un transfert ne peut pas être effectué vers les cellules ainsi essayées (notamment pour des raisons de trafic, à cause d'une surcharge de trafic dans ces cellules, ou pour des raisons radio, à cause de problèmes de propagation radio dans ces cellules).

Pour une description plus complète des systèmes cellulaires de radiocommunications mobiles tels que le système GSM ("Global System for Mobile communications") il est possible de se référer au livre de M. Mouly et M.B. Pautet, intitulé "The GSM System for Mobile Communications" (Palaiseau, France, ISBN : 2-9507190-07-7).

La présente invention concerne plus particulièrement les problèmes posés, pour la sélection de cellule, par les évolutions de ces systèmes liées à l'introduction de nouveaux services.

La présente invention concerne ainsi plus particulièrement le problème de sélection de cellule dans un réseau cellulaire de radiocommunications mobiles comportant différents types de cellules dans lesquelles différents types de services sont disponibles.

Un exemple de tel réseau est ainsi constitué par un réseau dans lequel sont progressivement introduits, dans une infrastructure existante, correspondant à un système tel qu'un système de deuxième génération (en particulier le système GSM précité), de nouveaux moyens d'accès radio à cette infrastructure, correspondant par exemple à des services de données en mode circuit tels que notamment HSCSD (pour "High Speed Circuit Switched Data"), ou à des services de données en mode paquet tels que notamment GPRS (pour "General Packet Radio Service"), ou encore à un système de troisième génération (en particulier le système UMTS, pour "Universal Mobile Telecommunication System").

Un tel système comporte ainsi des cellules dans lesquelles lesdits nouveaux services sont disponibles, par exemple des cellules UMTS, ou des cellules GSM/UMTS (c'est-à-dire des cellules ayant une fréquence balise commune à des moyens d'accès radio de type GSM et à des moyens d'accès radio de type UMTS), et des cellules dans lesquelles lesdits nouveaux services ne sont pas disponibles, par exemple des cellules GSM.

Dans un tel système, la possibilité existe qu'une cellule sélectionnée selon le procédé de sélection de cellule rappelé plus haut soit une cellule GSM, alors que le service requis nécessiterait une cellule UMTS ou GSM/UMTS, ou inversement que la cellule sélectionnée soit une cellule UMTS ou GSM/UMTS alors que le service requis se satisferait d'une cellule GSM, de sorte que l'allocation de ressources radio dans un tel réseau n'est dans aucun cas optimisée en fonction des services requis par les utilisateurs.

Un autre exemple de tel réseau est un réseau dans lequel sont introduits, dans une infrastructure existante correspondant à un système donné, par exemple le système GSM, et dans une zone géographique donnée, des moyens d'accès radio supplémentaires, dédiés à un groupe d'utilisateurs particuliers, et permettant à ces utilisateurs de disposer de services supplémentaires dans cette zone géographique.

Dans un tel système, la possibilité existe également, pour un utilisateur autorisé à bénéficier de tels services supplémentaires, qu'une cellule sélectionnée selon le procédé de sélection de cellule rappelé plus haut soit une cellule dans laquelle lesdits services supplémentaires ne sont pas disponibles, auquel cas ni l'utilisateur, ni le fournisseur de ces services, ne sont satisfaits. Ceci pourra notamment être le cas si la puissance d'émission des fréquences balise associées aux cellules dans lesquelles sont disponibles ces services supplémentaires est choisie relativement inférieure à la puissance d'émission des fréquences balise associées aux cellules dans lesquelles ces services supplémentaires ne sont pas disponibles, afin de ne pas perturber le plan de fréquences du système principal (notamment GSM) dans lequel de tels moyens d'accès radio supplémentaires sont introduits.

Ainsi le problème est généralement posé, dans un système cellulaire de radiocommunications mobiles comportant différents types de cellules dans lesquelles différents types de services sont disponibles, que la cellule sélectionnée ne correspond pas nécessairement à une meilleure cellule en termes de services.

Le document WO97/44922 décrit un système cellulaire de radiocommunications mobiles comportant différents types de cellules, dans lesquelles sont disponibles différents services de type multimédia, et dans lequel la sélection d'une meilleure cellule en mode dédié est effectuée sur la base d'un certain nombre de paramètres incluant des résultats de mesures pour des cellules candidates, la disponibilité de ressources dans ces cellules candidates, le type de service requis...etc. La solution décrite dans ce document a pour inconvénient d'accroître de manière relativement importante la complexité des stations mobiles et/ou de nécessiter de nombreux échanges de signalisation entre stations mobiles et réseau (en plus de ceux déjà prévus et rappelés plus haut), d'où une consommation importante de ressources radio pour ces échanges, et donc une utilisation non optimale des ressources radio disponibles ainsi qu'un accroissement du niveau global d'interférences dans le réseau.

Le document WO 98/56207 décrit un système cellulaire de radiocommunications mobiles comportant différents types de cellules dans lesquelles sont disponibles différents types de services, et dans lequel, à l'inverse du précédent document, la sélection d'une cellule appropriée en termes de services, en mode dédié, est prise en charge par le réseau, en tenant compte de données d'abonnement relatives à l'utilisateur considéré, et contenant elles-mêmes des informations de service. Une telle solution a notamment pour inconvénient que la cellule sélectionnée n'est pas nécessairement optimale, notamment car elle ne tient pas compte de l'environnement radio tel que perçu par les stations mobiles.

Le document WO 86/34499 décrit un système dans lequel des abonnés dits fixes ont des droits d'accès limités à certaines cellules formant une zone dite d'abonnement fixe. Ce document décrit une fonction dite de « re-direction », selon laquelle si une cellule autre que celles d'une zone d'abonnement fixe est sélectionnée en mode veille, et si au moins une cellule de cette zone d'abonnement fixe est une cellule voisine de la cellule sélectionnée, alors le réseau indique ces cellules voisines à la station mobile, de sorte que la station mobile puisse sélectionner une de ces cellules voisines, pour l'établissement d'un appel. Ce document ne résout pas le problème de la sélection de cellule en mode dédié dans un système cellulaire de radiocommunications mobiles comportant différents types de cellules dans lesquelles sont disponibles différents types de services, en particulier le problème de transfert inter-cellulaire assisté par le mobile.

Ce dernier problème est traité par le document WO 9838827 qui décrit un système comportant des cellules dites cellules spéciales dans lesquelles des services spéciaux sont disponibles pour certains utilisateurs. Dans ce document une liste de cellules dite liste spéciale est composée pour une station mobile et transmise à un contrôleur de stations de base lors de l'établissement d'un appel, et si nécessaire lors d'un transfert inter-cellulaire, de façon à rediriger si nécessaire une station mobile vers une telle cellule spéciale. Dans ce document, l'unité qui contrôle le transfert inter-cellulaire (par exemple le contrôleur de stations de base) contrôle le besoin de transfert inter-cellulaire en fonction des mesures effectuées suivant l'art antérieur. Quand un transfert inter-cellulaire doit être effectué le contrôleur de stations de base sélectionne des cellules cible appropriées pour un transfert inter-cellulaire sur la base desdits résultats de mesures. Suivant ce document, si une des cellules sélectionnées est dans ladite liste spéciale, cette cellule est sélectionnée comme cellule cible pour le transfert inter-cellulaire. Si aucune des cellules cible possibles n'est dans ladite liste spéciale, le contrôleur de stations de base sélectionne comme cellule cible une cellule qui vérifie le critère de transfert inter-cellulaire suivant l'art antérieur. Suivant ce document il y a donc encore la possibilité que la cellule sélectionnée ne soit pas optimale en termes de service.

On peut également mentionner le document WO 96/28947, qui décrit un système dans lequel les stations mobiles peuvent, à l'aide d'informations sur les services disponibles dans différents réseaux, qui leur sont fournies par ces différents réseaux, chosir un réseau le plus approprié pour une connexion.

Ainsi l'art antérieur ne résout pas de manière optimale le problème de sélection de cellule en mode dédié, dans un système cellulaire de radiocommunications mobiles comportant différents types de cellules dans lesquelles sont disponibles différents types de services.

La présente invention permet notamment d'éviter les divers inconvénients mentionnés dans ce qui précède.

La présente invention a ainsi pour objet un procédé de sélection de cellule en mode dédié dans un système cellulaire de radiocommunications mobiles, procédé dans lequel une station mobile est informée de cellules voisines de sa cellule serveuse actuelle, sur lesquelles des mesures sont à effectuer, et reporte vers le réseau des résultats de mesures ainsi obtenus, ce procédé étant essentiellement caractérisé en ce que, ledit réseau comportant différents types de cellules dans lesquelles sont disponibles différents types de services, la station mobile est informée de celles desdites cellules voisines qui sont préférées en termes de services, sur lesquelles des mesures sont à effectuer, et reporte au réseau des résultats de mesures sur de telles cellules.

Ainsi, les résultats de mesures reportés au réseau se rapportent à des cellules préférées en termes de service, garantissant alors la sélection, par le réseau, d'une cellule optimale d'un point de vue service (étant entendu que d'un point de vue radio, les cellules préférées en termes de service ne constituent pas nécessairement des meilleures cellules, mais que la cellule sélectionnée parmi ces cellules préférées en termes de services peut être la meilleure d'un point de vue radio, suivant lesdits résultats de mesures).

En d'autres termes la présente invention permet d'adapter la procédure classique de sélection de cellule en mode dédié, ou de transfert assisté par le mobile, au cas de réseaux comportant différents types de cellules dans lesquelles sont disponibles différents types de services, et ce, en outre, d'une manière relativement simple et qui ne nécessite pas de modifications importantes, ni du réseau ni des stations mobiles.

Suivant une autre caractéristique, ladite information de la station mobile est effectuée dans un canal de signalisation dédié alloué à cette station mobile.

Ceci permet en outre de résoudre les problèmes suivants. Dans les méthodes classiques rappelées plus haut, les diverses informations système nécessaires pour réaliser la sélection de cellule sont diffusées sur un canal de diffusion commun (tel que BCCH, pour"Broadact Control Channel" en anglais, dans le système GSM). On conçoit à partir des méthodes rappelées plus haut que l'acquisition et l'exploitation par les stations mobiles de telles informations sont des opérations complexes et coûteuses en temps de traitement. Cet inconvénient est encore amplifié dans les systèmes tels que ceux présentés plus haut, dans lesquels de nouveaux services sont introduits, et qui nécessitent de ce fait une grande quantité d'informations pour pouvoir les décrire suffisamment vis-à-vis des stations mobiles, pour permettre à celles-ci d'agir efficacement dans le processus de sélection de cellule. En outre, une telle diffusion poserait de nombreux problèmes de réalisation en pratique dans un tel réseau, du fait de la capacité relativement faible des canaux de diffusion, initialement dimensionnés pour des systèmes ne comportant qu'un seul type de cellule, dans lesquelles sont disponibles les mêmes services.

Un tel mode de transmission des cellules préférées en termes de services, dans un canal de signalisation dédié alloué alloué à la station mobile, permet d'éviter ces inconvénients.

Un tel mode de transmission autorise en outre une personnalisation des informations transmises, en fonction du profil de l'utilisateur, que ne permet pas le mode de transmission par diffusion.

Suivant une autre caractéristique, les cellules voisines de la cellule serveuse actuelle, qui sont préférées en termes de services, et sur lesquelles des mesures sont à effectuer, sont déterminées dans le réseau à partir du type de service requis par la station mobile.

Suivant une autre caractéristique, le type de service requis peut être indiqué au réseau par la station mobile elle-même.

Suivant une autre caractéristique, le type de service requis peut être obtenu dans le réseau par interrogation d'une base de données d'abonnés mobiles prévue dans ce réseau, et contenant des informations de services.

En outre, suivant une autre caractéristique, ladite sélection de cellule en mode dédié peut en particulier être effectuée lors d'un transfert de communication inter-cellulaire, d'une cellule initialement sélectionnée, en mode veille, pour l'accès au réseau par une station mobile, et ne constituant pas une meilleure cellule en termes de services, vers une telle meilleure cellule en termes de services.

Ceci permet en particulier de sélectionner une cellule optimale pour un accès au réseau, tout en évitant les divers inconvénients mentionnés précédemment.

Un autre objet de la présente invention consiste dans une station mobile permettant de mettre en oeuvre un tel procédé.

Un autre objet de la présente invention consiste dans une entité pour réseau cellulaire de radiocommunications mobiles, permettant de mettre en oeuvre un tel procédé.

D'autres objets et caractéristiques de la présente invention apparaîtront à la lecture de la description suivante d'un exemple de réalisation, faite en relation avec les dessins ci-annexés, dans lesquels:
- la figure 1 est un diagramme destiné à illustrer un exemple de système auquel la présente invention est applicable,
- la figure 2 est un diagramme destiné à illustrer un exemple de procédé suivant l'invention,
- les figures 3 et 4 sont des diagrammes destinés à illustrer un exemple de moyens à prévoir, respectivement dans une station mobile et dans un réseau auquel la présente invention est applicable, pour permettre d'utiliser le procédé suivant l'invention.

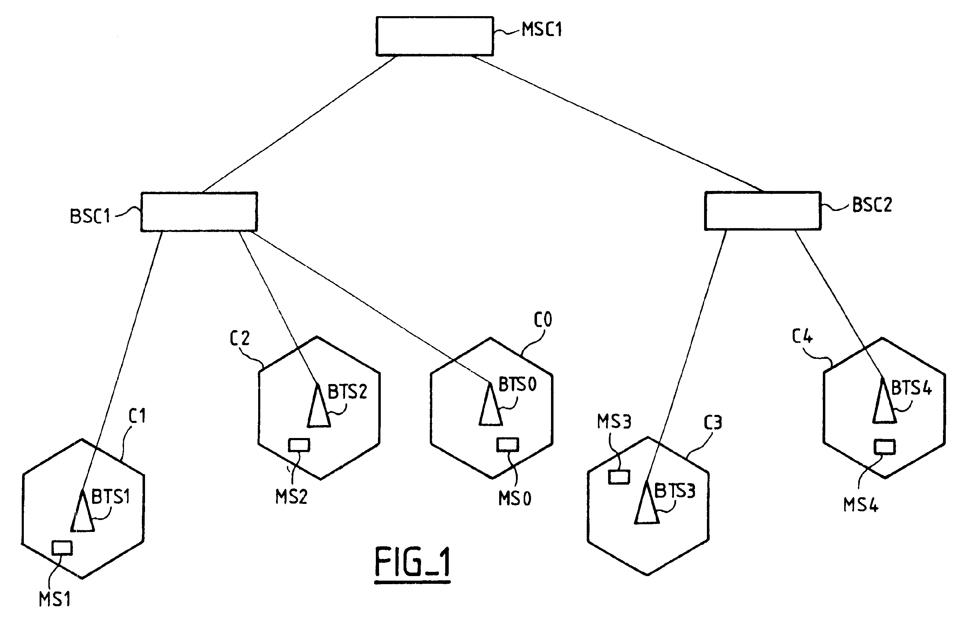

Un système cellulaire de radiocommunications mobiles comporte essentiellement, comme rappelé sur la figure 1:
- un ensemble de stations de base (ou BTS, pour "Base Transceiver Station" en anglais), telles que celles notées BTS0, BTS1, BTS2, BTS3 et BTS4, chacune de ces stations de base étant, dans l'exemple illustré, affectée à une cellule (notée respectivement C0, C1, C2, C3, et C4), et ces stations de base étant en relation, via une interface radio, avec des stations mobiles, telles que MS0, MS1, MS2, MS3, MS4,
- un ensemble de contrôleurs de stations de base (ou BSC, pour "Base Station Controller" en anglais), tels que ceux notés BSC1 et BSC2, chacun de ces BSC contrôlant, du point de vue de la gestion des ressources radio, un sous-ensemble de cellules, le contrôleur de stations de base BSC1 contrôlant dans l'exemple illustré les cellules C0, C1 et C2, et le contrôleur de stations de base BSC2 contrôlant dans cet exemple les cellules C3 et C4,
- un ensemble de centres de commutation mobile, appelés aussi MSC (pour "Mobile Switching Center" en anglais), dont un seul, noté MSC1, est illustré sur la figure, chacun de ces MSC étant d'une manière non illustrée spécifiquement, en relation avec des réseaux extérieurs tels que notamment les réseaux PSTN (pour "Public Switched Telephone Network") ou ISDN (pour "Integrated Services Digital Network"), et contrôlant, du point de vue de la gestion des communications, un sous-ensemble de contrôleurs de stations de base, le centre de commutation mobile MSC1 contrôlant dans l'exemple illustré les contrôleurs de stations de base BSC1 et BSC2,
- des bases de données telles que HLR (pour "Home Location Register") ou VLR (pour "Visitors Location Register"), avec lesquelles les MSC sont en relation, et permettant notamment de gérer les données d'abonnement et la mobilité des utilisateurs.

L'ensemble formé par les BTS et BSC, aussi appelé BSS (pour "Base Station Subsystem" en anglais), constitue ce qui a été appelé plus haut des moyens d'accès radio au réseau.

L'ensemble formé par les MSC, HLR et VLR est aussi appelé NSS (pour "Network and Switching Subsystem").

A titre d'exemple auquel la présente invention est applicable, les moyens d'accès radio formés des éléments BTS3, BTS4 et BSC2 constituent de nouveaux moyens d'accès radio, introduits dans une infrastructure existante correspondant par exemple au système GSM et comprenant déjà ses propres moyens d'accès radio, formés des éléments BTS0, BTS1, BTS2 et BSC1. Des cellules telles que C0, C1 et C2 constituent alors un premier type de cellules, correspondant à des cellules GSM, et des cellules telles que C3 et C4 constituent un deuxième type de cellules, dans lesquelles des services supplémentaires sont disponibles.

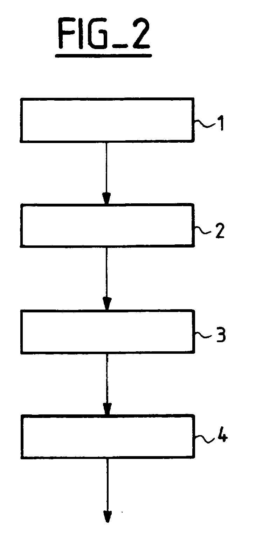

La figure 2 est un schéma destiné à illustrer un procédé de sélection de cellule en mode dédié, suivant l'invention.

Comme illustré schématiquement sur la figure 2, une station mobile :
- reçoit des informations lui indiquant les cellules voisines de sa cellule serveuse qui préférées en termes de services et pour lesquelles des mesures sont à effectuer (étape notée 1),
- effectue des mesures sur de telles cellules (étape notée 2),
- reporte au réseau des résultats de mesure ainsi obtenus (étape notée 3).

Comme déjà indiqué, les résultats de mesures reportés au réseau se rapportent à des cellules préférées en termes de service, garantissant alors la sélection, par le réseau, d'une cellule optimale vers laquelle transférer la communication (étape 4).

La manière dont la station mobile effectue lesdites mesures, et reporte au réseau des résultats de mesure ainsi obtenus, peut être une manière classique, qui ne nécessite pas d'être redécrite ici. En particulier la station mobile peut reporter seulement un sous-ensemble des cellules sur lesquelles elle effectue ces mesures, en particulier les meilleures d'entre elles, d'un point de vue radio.

De même, la manière dont le réseau sélectionne une cellule, sur la base des résultats de mesures ainsi reportés, peut être une manière classique, qui ne nécessite pas d'être redécrite ici.

Les informations indiquant à la station mobile les cellules voisines de sa cellule serveuse qui sont préférées en termes de services, et pour lesquelles des mesures sont à effectuer, sont avantageusement indiquées à la station mobile par le réseau dans un canal de signalisation dédié alloué à cette station mobile.

A titre d'exemple, dans un système cellulaire tel que le système GSM, ledit canal de signalisation dédié peut être, suivant le cas, un canal de type SDCCH (pour "Stand alone Dedicated Control Channel"), utilisé pour transmettre des informations de signalisation en dehors d'une communication, par exemple au cours de procédures de gestion de mobilité, ou lors de phases d'établissement ou de relâchement d'appels, ou SACCH (pour "Slow Associated Control Channel") ou FACCH (pour "Fast Associated Control Channel"), utilisés pour transmettre des informations de signalisation au cours d'une communication.

Les informations ainsi communiquées à la station mobile par le réseau peuvent être élaborées dans le réseau à partir du type de service requis par la station mobile.

Le type de service requis peut être indiqué au réseau par la station mobile elle-même, en particulier pendant l'établissement d'un appel.

Le type de service requis peut être obtenu dans le réseau par interrogation d'une base de données d'abonnés mobiles (telle que notamment HLR/VLR dans un système tel que le système GSM) prévue dans le réseau et contenant des informations de services.

Une telle sélection de cellule en mode dédié peut en particulier être effectuée lors d'un transfert de communication inter-cellulaire, d'une cellule initialement sélectionnée, en mode veille, pour l'accès au réseau par une station mobile, et ne constituant pas une meilleure cellule en termes de services, vers une telle meilleure cellule en termes de services. Une telle application est particulièrement avantageuse en ce qu'elle permet d'éviter les problèmes mentionnés plus haut en relation avec les principes connus de sélection de cellule, dans de tels types de systèmes.

Ainsi, sur l'exemple simplifié de la figure 1, on peut par exemple supposer que les cellules C0, C1 et C2 sont des cellules dans lesquelles ne se trouvent pas disponibles de nouveaux services, que les cellules C3, C4 sont des cellules dans lesquels se trouvent disponibles de nouveaux services, et que la cellule C0 a été initialement sélectionnée pour l'accès au réseau par une station mobile telle que MS0 par exemple. Dans cet exemple celles des cellules voisines qui sont préférées en termes de services, et sur lesquelles la station mobile a à effectuer des mesures, pourraient inclure les cellules C3 et C4. Sur cette base la station mobile pourrait reporter au réseau des résultats de mesures se rapportant aux cellules C3 et C4, et le réseau pourrait sélectionner par exemple la cellule C3.

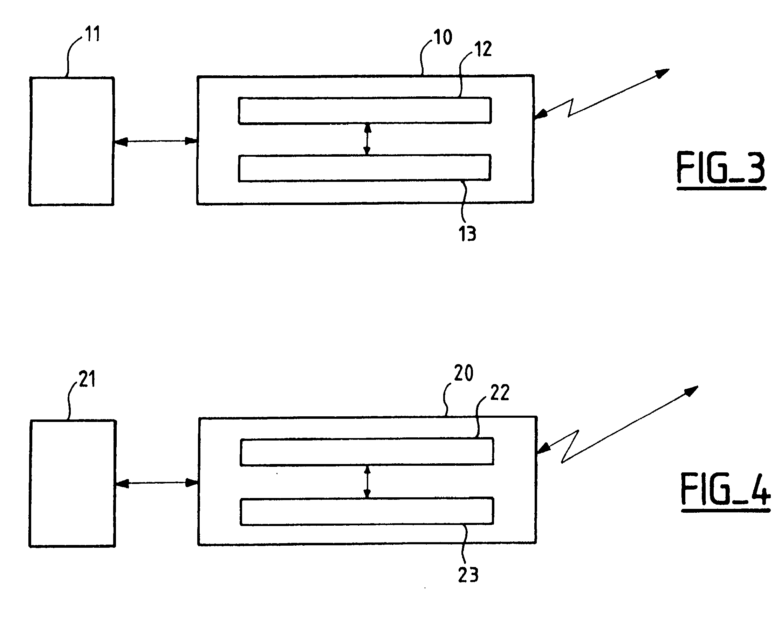

Comme rappelé sur la figure 3, de manière connue, une station mobile comporte des moyens 10 dits d'interface air, permettant:
- d'une part de mettre des informations issues de moyens d'interface homme-machine 11, dans une forme admissible pour leur transmission sur l'interface-air,
- d'autre part de restituer des informations reçues sur l'interface-air, pour transmission auxdits moyens d'interface homme-machine 11.

Les moyens 10 d'interface-air comportent eux-mêmes, de manière connue, des moyens d'émission-réception 12, incluant des fonctions de traitement en bande de base et des fonctions radioélectriques, et des moyens de commande 13.

Lesdits moyens de commande 13 permettent notamment d'émettre et de recevoir les différentes informations de signalisation échangées entre station mobile et réseau, dans les différentes procédures, ou protocoles, prévus pour le fonctionnement dans ce réseau.

Notamment, dans la procédure considérée ici de sélection de cellule en mode dédié, lesdits moyens de commande 13 peuvent eux-mêmes comporter:
des moyens pour permettre à la station mobile de recevoir des informations quant à celles des cellules voisines de sa cellule serveuse actuelle, qui sont préférées en termes de services,
des moyens pour reporter au réseau des résultats de mesure ainsi obtenus sur de telles cellules.

De telles opérations de réception d'informations, ou de report de résultats de mesures, peuvent elles-mêmes utiliser tel ou tel type de procédure, ou protocole, déjà prévu dans ce type de système.

De telles procédures étant bien connues de l'homme du métier, et la réalisation particulière de tels moyens ne présentant pas non plus de difficulté particulière pour l'homme du métier, de tels moyens ne nécessitent pas d'être décrits ici de manière plus détaillée que par leur fonction.

La figure 4 est un schéma destiné à illustrer le type de moyens à prévoir, dans une entité de réseau cellulaire de radiocommunications mobiles (notamment BSS pour "Base Station Subsystem"), dans un système suivant l'invention.

Comme rappelé sur la figure 4, de manière connue une entité telle que l'entité BSS comporte des moyens 20 dits d'interface-air permettant:
- d'une part de mettre des informations issues d'une entité 21 dite de niveau supérieur du système considéré (notamment NSS, pour "Network and Switching Subsystem"), dans une forme admissible pour leur transmission sur l'interface-air,
- d'autre part de restituer des informations reçues sur l'interface-air, pour transmission à ladite entité de niveau supérieur 21.

De même que décrit précédemment pour la station mobile, les moyens 20 d'interface-air comportent eux-mêmes classiquement des moyens d'émission-réception 22, incluant des fonction de traitement en bande de base et des fonctions radioélectriques, et des moyens de commande 23.

Lesdits moyens de commande 23 permettent notamment d'émettre et de recevoir les différents messages de signalisation échangés entre station mobile et réseau, dans les différentes procédures, ou protocoles, prévus pour le fonctionnement dans ce réseau.

Notamment, dans la procédure considérée ici de sélection de cellule en mode dédié, lesdits moyens de commande 23 peuvent eux-mêmes comporter:
des moyens pour transmettre à la station mobile des informations quant à celles des cellules voisines de sa cellule serveuse actuelle, qui sont préférées en termes de services,
des moyens pour recevoir lesdits résultats de mesures reportés sur de telles cellules.

De telles opérations de transmission d'informations ou de réception de résultats de mesure reportés peuvent elles-mêmes utiliser tel ou tel type de procédure, ou protocole, déjà prévu dans ce type de système.

De même, de telles procédures étant bien connues de l'homme du métier, et la réalisation particulière de tels moyens ne présentant pas non plus de difficulté particulière pour l'homme du métier, de tels moyens ne nécessitent pas non plus d'être décrits ici de manière plus détaillée que par leur fonction.

## Revendications

1. Procédé de sélection de cellule en mode dédié dans un système cellulaire de radiocommunications mobiles, procédé dans lequel une station mobile est informée de cellules voisines de sa cellule serveuse actuelle, sur lesquelles des mesures sont à effectuer, et reporte vers le réseau des résultats de mesures ainsi obtenus, ce procédé étant caréctérisé en ce que, ledit réseau comportant différents types de cellules dans lesquelles sont disponibles différents types de services, la station mobile est informée (1) de celles desdites cellules qui sont préférées en termes de services, sur lesquelles des mesures sont à effectuer, et reporte (3) au réseau des résultats de mesures sur de telles cellules.

2. Procédé selon la revendication 1, **caractérisé en ce que** ladite information de la station mobile est effectuée dans un canal de signalisation dédié alloué à cette station mobile.

3. Procédé selon l'une des revendications 1 et 2, **caractérisé en ce que** lesdites cellules voisines de la cellule serveuse actuelle, qui sont préférées en termes de services, et sur lesquelles des mesures sont à effectuer, sont déterminées dans le réseau à partir du type de service requis par la station mobile.

4. Procédé selon la revendication 3, **caractérisé en ce que** le type de service requis est indiqué au réseau par la station mobile elle-même.

5. Procédé selon la revendication 3, **caractérisé en ce que** le type de service requis est obtenu dans le réseau par interrogation d'une base de données d'abonnés mobiles prévue dans ce réseau, et contenant des informations de services.

6. Procédé selon l'une des revendications 1 à 5, **caractérisé en ce que** ladite sélection de cellule en mode dédié est effectuée lors d'un transfert de communication inter-cellulaire, d'une cellule initialement sélectionnée, en mode veille, pour l'accès au réseau par une station mobile, et ne constituant pas une meilleure cellule en termes de services, vers une telle meilleure cellule en termes de services.

7. Station mobile, **caractérisée en ce qu'**elle comporte:
des moyens (13) pour permettre à la station mobile de recevoir des informations quant à celles des cellules voisines de sa cellule serveuse actuelle, qui sont préférées en termes de service,
des moyens (13) pour reporter au réseau des résultats de mesure ainsi obtenus sur de telles cellules.

8. Station mobile selon la revendication 7, **caractérisée en ce qu'**elle comporte:
des moyens (13) pour permettre à la station mobile de recevoir des informations quant à celles des cellules voisines de sa cellule serveuse actuelle, qui sont préférées en termes de service, dans un canal de signalisation dédié alloué à cette station mobile.

9. Station mobile selon l'une des revendications 7 et 8, **caractérisée en ce que** ladite sélection de cellule en mode dédié est effectuée lors d'un transfert de communication inter-cellulaire, d'une cellule initialement sélectionnée, en mode veille, pour l'accès au réseau par une station mobile, et ne constituant pas une meilleure cellule en termes de services, vers une telle meilleure cellule en termes de services.

10. Entité pour réseau cellulaire de radiocommunications mobiles, **caractérisée en ce qu'**elle comporte :
des moyens (23) pour transmettre à une station mobile des informations quant à celles des cellules voisines de sa cellule serveuse actuelle, qui sont préférées en termes de services,
des moyens (23) pour recevoir des résultats de mesure sur de telles cellules, reportés au réseau par ladite station mobile.

11. Entité selon la revendication 10, **caractérisée en ce qu'**elle comporte :
des moyens (23) pour transmettre à une station mobile des informations quant à celles des cellules voisines de sa cellule serveuse actuelle, qui sont préférées en termes de services, dans un canal de signalisation dédié alloué à cette station mobile.

12. Entité selon l'une des revendications 10 et 11, **caractérisée en ce qu'**elle comporte :
des moyens pour déterminer lesdites cellules voisines de la cellule serveuse actuelle, qui sont préférées en termes de services, et sur lesquelles des mesures sont à effectuer, à partir du type de service requis par la station mobile.

13. Entité selon l'une des revendications 10 à 12, **caractérisée en ce qu'**elle comporte :
des moyens pour déterminer lesdites cellules voisines de la cellule serveuse actuelle, qui sont préférées en termes de services, et sur lesquelles des mesures sont à effectuer, à partir du type de service requis par la station mobile, indiqué au réseau par la station mobile elle-même.

14. Entité selon l'une des revendications 10 à 13, **caractérisée en ce qu'**elle comporte :
des moyens pour déterminer lesdites cellules voisines de la cellule serveuse actuelle, qui sont préférées en termes de services, et sur lesquelles des mesures sont à effectuer, à partir du type de services requis par la station mobile, obtenu dans le réseau par interrogation d'une base de données d'abonnés mobiles prévue dans ce réseau, et contenant des informations de services.

15. Entité selon l'une des revendications 10 à 14, **caractérisée en ce que** ladite sélection de cellule en mode dédié est effectuée lors d'un transfert de communication inter-cellulaire, d'une cellule initialement sélectionnée, en mode veille, pour l'accès au réseau par une station mobile, et ne constituant pas une meilleure cellule en termes de services, vers une telle meilleure cellule en termes de services.

## Claims

1. A method of selecting a cell in dedicated mode in a cellular mobile radio system, in which method a mobile station is informed of cells adjoining its current server station and on which measurements are to be performed and reports measurement results obtained in this way to the network, which method is **characterized in that** for said network including different types of cells in which different types of services are available, the mobile station is informed (1) which cells on which measurements are to be performed are preferred in terms of services and reports (3) to the network the results of measurements on those cells.

2. A method according to claim 1, **characterized in that** the mobile station is supplied with said information via a dedicated signaling channel allocated to that mobile station.

3. A method according to claim 1 or claim 2, **characterized in that** said cells adjoining said current server cell and on which measurements are to be performed and which are preferred in terms of services are determined within the network on the basis of the type of service required by the mobile station.

4. A method according to claim 3, **characterized in that** the type of service required is indicated to the network by the mobile station itself.

5. A method according to claim 3, **characterized in that** the type of service required is determined within the network by interrogating a mobile user database provided in the network and containing information about services.

6. A method according to any one of claims 1 to 5, **characterized in that** said cell selection in dedicated mode is effected during an inter-cell call handover from a cell which was initially selected in standby mode for a mobile station to access the network and which did not constitute a best cell in terms of services, to such a best cell in terms of services.

7. A mobile station, **characterized in that** it comprises:
· means (13) enabling the mobile station to receive information on which cells adjoining its current server cell are preferred in terms of services; and
· means (13) for reporting to the network the results of measurements obtained in this way on those cells.

8. A mobile station according to claim 7, **characterized in that** it comprises:
· means (13) enabling the mobile station to receive information on which cells adjoining its current server cell are preferred in terms of service, over a dedicated signaling channel allocated to said mobile station.

9. A mobile station according to claim 7 or claim 8, **characterized in that** said cell selection in dedicated mode is effected during an inter-cell call handover from a cell which was initially selected in standby mode for a mobile station to access the network and which does not constitute a best cell in terms of services, to such a best cell in terms of services.

10. A cellular mobile radio network entity, **characterized in that** it comprises:
· means (23) for transmitting to the mobile station information on which cells adjoining its current server cell are preferred in terms of services; and
· means (23) for receiving the results of measurements on such cells, reported to the network by said mobile station.

11. An entity according to claim 10, **characterized in that** it comprises:
· means (23) for transmitting to the mobile station information on which cells adjoining its current server cell are preferred in terms of services, over a dedicated signaling channel allocated to said mobile station.

12. An entity according to claim 10 or claim 11, **characterized in that** it comprises:
· means for determining said cells adjoining the current server cell that are preferred in terms of services and on which measurements are to be performed, on the basis of the type of service required by the mobile station.

13. An entity according to any one of claims 10 to 12, **characterized in that** it comprises:
· means for determining which of said cells adjoining the current server cell are preferred in terms of services and on which measurements are to be performed, on the basis of the type of service required by the mobile station, indicated to the network by the mobile station itself.

14. An entity according to any one of claims 10 to 13, **characterized in that** it comprises:
· means for determining which of said cells adjoining the current server cell are preferred in terms of services and on which measurements are to be performed, on the basis of the type of service required by the mobile station, as obtained in the network by interrogating a mobile user database provided in the network and containing information about services.

15. An entity according to any one of claims 10 to 14, **characterized in that** said cell selection in dedicated mode is effected during an inter-cell call handover from a cell initially selected in standby mode for a mobile station to access the network and which does not constitute a best cell in terms of services, to such a best cell in terms of services.

## Patentansprüche

1. Zellauswahlverfahren im dedizierten Modus in einem zellularen Mobilfunknetzwerksystem, Verfahren bei dem eine Mobilstation über Nachbarzellen ihrer derzeitigen Serverzelle informiert wird, an denen Messungen durchzuführen sind und an das Netz die so erhaltenen Messergebnisse überträgt, wobei dieses Verfahren **dadurch gekennzeichnet ist, dass** dieses Netz verschiedene Arten von Zellen beinhaltet, in denen verschiedene Arten von Diensten verfügbar sind, wobei die Mobilstation über diejenigen dieser Zellen informiert (1) wird, die hinsichtlich des Dienstes bevorzugt werden, an denen Messungen vorzunehmen sind, und an das Netz Messergebnisse an diesen Zellen überträgt (3).

2. Verfahren gemäß Anspruch 1, **dadurch gekennzeichnet, dass** diese Informierung der Mobilstation in einem dedizierten Signalisierungskanal erfolgt, der dieser Mobilstation zugeteilt ist.

3. Verfahren gemäß einem der Ansprüche 1 und 2, **dadurch gekennzeichnet, dass** diese Nachbarzellen der derzeitigen Serverzelle, die hinsichtlich des Dienstes bevorzugt werden und an denen Messungen vorzunehmen sind, im Netz ausgehend von der Art des von der Mobilstation geforderten Dienstes ermittelt werden.

4. Verfahren gemäß Anspruch 3, **dadurch gekennzeichnet, dass** die erforderliche Dienstart dem Netz von der Mobilstation selbst angegeben wird.

5. Verfahren gemäß Anspruch 3, **dadurch gekennzeichnet, dass** die erforderliche Dienstart im Netz durch Abfragen einer in diesem Netz vorgesehenen mobilen Teilnehmerdatenbank, die Dienstinformationen enthält, erhalten wird.

6. Verfahren gemäß einem der Ansprüche 1 bis 5, **dadurch gekennzeichnet, dass** diese Zellauswahl im dedizierten Modus bei einer interzellularen Verbindungsübergabe von einer ursprünglich im Stand-by-Modus von einer Mobilstation für den Zugang zum Netz gewählten Zelle, die nicht eine beste Zelle hinsichtlich des Dienstes darstellt, zu einer solchen besten Zelle für den Dienst erfolgt.

7. Mobilstation, **dadurch gekennzeichnet, dass** sie folgendes beinhaltet:
Mittel (13), die es der Mobilstation ermöglichen, Informationen betreffend diejenigen der Nachbarzellen ihrer derzeitigen Serverzelle zu empfangen, die hinsichtlich des Dienstes bevorzugt werden,
Mittel (13), um die so an diesen Zellen erzielten Messergebnisse an das Netz zu übertragen.

8. Mobilstation gemäß Anspruch 7, **dadurch gekennzeichnet, dass** sie folgendes beinhaltet:
Mittel (13), die es der Mobilstation ermöglichen, Informationen betreffend diejenigen der Nachbarzellen ihrer derzeitigen Serverzelle zu empfangen, die hinsichtlich des Dienstes bevorzugt werden, und zwar auf einem dedizierten Signalisierungskanal, der dieser Mobilstation zugeteilt ist.

9. Mobilstation gemäß einem der Ansprüche 7 und 8, **dadurch gekennzeichnet, dass** diese Zellauswahl im dedizierten Modus bei einer interzellularen Verbindungsübergabe von einer ursprünglich im Stand-by-Modus von einer Mobilstation für den Zugang zum Netz gewählten Zelle, die nicht eine beste Zelle hinsichtlich des Dienstes darstellt, zu einer solchen besten Zelle für den Dienst erfolgt.

10. Instanz für zellulares Mobilfunknetzwerksystem, **dadurch gekennzeichnet, dass** sie folgendes beinhaltet:
Mittel (23), um an eine Mobilstation Informationen zu übertragen betreffend diejenigen der Nachbarzellen ihrer derzeitigen Serverzelle, die hinsichtlich des Dienstes bevorzugt werden,
Mittel (23), um Messergebnisse an diesen Zellen, die von dieser Mobilstation an das Netz übertragen werden, zu empfangen.

11. Instanz gemäß Anspruch 10, **dadurch gekennzeichnet, dass** sie folgendes beinhaltet:
Mittel (23), um an eine Mobilstation Informationen zu übertragen betreffend diejenigen der Nachbarzellen ihrer derzeitigen Serverzelle, die hinsichtlich des Dienstes bevorzugt werden, und zwar in einem dedizierten Signalisierungskanal, der dieser Mobilstation zugeteilt ist.

12. Instanz gemäß einem der Ansprüche 10 und 11, **dadurch gekennzeichnet, dass** sie folgendes beinhaltet:
Mittel, um diese Nachbarzellen der derzeitigen Serverzelle zu ermitteln, die hinsichtlich des Dienstes bevorzugt werden und an welchen Messungen vorzunehmen sind, ausgehend von der Dienstart, die von der Mobilstation gefordert wird.

13. Instanz gemäß einem der Ansprüche 10 bis 12, **dadurch gekennzeichnet, dass** sie folgendes beinhaltet:
Mittel, um diese Nachbarzellen der derzeitigen Serverzelle zu ermitteln, die hinsichtlich des Dienstes bevorzugt werden und an welchen Messungen vorzunehmen sind, ausgehend von der Dienstart, die von der Mobilstation gefordert wird, wobei diese Dienstart dem Netz von der Mobilstation selbst angegeben wird.

14. Instanz gemäß einem der Ansprüche 10 bis 13, **dadurch gekennzeichnet, dass** sie folgendes beinhaltet:
Mittel, um diese Nachbarzellen der derzeitigen Serverzelle zu ermitteln, die hinsichtlich des Dienstes bevorzugt werden und an welchen Messungen vorzunehmen sind, ausgehend von der Dienstart, die von der Mobilstation gefordert wird, wobei diese Dienstart im Netz durch Abfragen einer in diesem Netz vorgesehenen mobilen Teilnehmerdatenbank, die Dienstinformationen enthält, erhalten wird.

15. Instanz gemäß einem der Ansprüche 10 bis 14, **dadurch gekennzeichnet, dass** diese Zellauswahl im dedizierten Modus bei einer interzellularen Verbindungsübergabe von einer ursprünglich im Stand-by-Modus von einer Mobilstation für den Zugang zum Netz gewählten Zelle, die nicht eine beste Zelle hinsichtlich des Dienstes darstellt, zu einer solchen besten Zelle für den Dienst erfolgt.
